Europäisches Patentamt

European Patent Office

Office européen des brevets

(11) Veröffentlichungsnummer : **0 021 154**
**B1**

# EUROPÄISCHE PATENTSCHRIFT

(45) Veröffentlichungstag der Patentschrift :
**11.05.83**

(21) Anmeldenummer : **80103101.4**

(22) Anmeldetag : **04.06.80**

(51) Int. Cl.³ : **F 16 B 37/12, F 01 M 11/04**

(54) **Gewindebuchse mit Verdrehsicherung.**

(30) Priorität : **06.06.79 DE 2922851**

(43) Veröffentlichungstag der Anmeldung :
**07.01.81 Patentblatt 81/01**

(45) Bekanntmachung des Hinweises auf die Patenterteilung : **11.05.83 Patentblatt 83/19**

(84) Benannte Vertragsstaaten :
**FR GB IT SE**

(56) Entgegenhaltungen :
**AU B 480 080**
**DE A 2 717 308**
**DE A 2 811 747**
**US A 2 983 385**
**US A 3 370 144**
**US A 3 387 621**

(73) Patentinhaber : **Böllhoff & Co.**
**Archimedesstrasse 1-4**
**D-4800 Bielefeld 14 (DE)**

(72) Erfinder : **Kobusch, Klaus, Ing.-Grad.**
**Torfstrichweg 8**
**D-4800 Bielefeld 1 (DE)**

(74) Vertreter : **Hauck, Hans, Dipl.Ing. et al**
**Patentanwälte Dipl. Ing. H. Hauck Dipl. Phys. W. Schmitz**
**Dipl.Ing.E.Graalfs Dipl.Ing.W.Wehnert**
**Dipl.Phys.W.Carstens Dr.-Ing.W.Döring**
**Mozartstrasse 23 D-8000 München 2 (DE)**

## Gewindebuchse mit Verdrehsicherung

Die Erfindung bezieht sich auf eine Gewindebuchse mit Außengewinde, Innenbohrung und Verdrehsicherung, mit einem angeformten, umlaufenden und in Umfangsrichtung von der Kreisform abweichenden Kragen und einem sich anschließenden, im wesentlichen glattwandigen Bereich mit geringerer Wandstärke als ein sich an diesen Bereich anschließenden und das Außengewinde tragenden Gewindebereich, wobei nach Einschrauben der Gewindebuchse in eine Aufnahmebohrung eines Werkstückes bis zur Anlage der die Aufnahmebohrung übergreifenden Teile des Kragens an die Oberfläche des Werkstücks der Kragen unter Verminderung der Höhe des glattwandigen Bereichs durch Stauchen in der Oberfläche des Werkstücks durch axiale Belastung des Kragens einpreßbar ist.

Es ist eine Gewindebuchse dieser Art bekannt (DE-A-2 811 747), bei der in einigen Anwendungsfällen, wie z. B. dem Einschrauben einer Ölablaßschraube eines Verbrennungsmotors in eine im Motorgehäuse eingebaute Gewindebuchse, die Verbindung hinsichtlich der Vergleichmäßigung der Verformung des Kragens und des Stauchbereichs in Umfangsrichtung verbesserungswürdig ist.

Die Erfindung, wie sie in den Ansprüchen gekennzeichnet ist, löst die Aufgabe, eine Gewindebuchse der im Oberbegriff des Anspruchs 1 genannten Art zu schaffen, bei der die Verformung des Kragens und des Stauchbereichs in Umfangsrichtung beim Einbau der Gewindebuchse in ein Werkstück vergleichmäßigt ist.

Der Deckbereich sorgt für eine Versteifung des Kragens und für eine Vergleichmäßigung der Beaufschlagung des Kragens beim Einbau und bei der bestimmungsgemäßen Verwendung der Gewindebuchse. Die freie Stirnfläche des Deckbereichs bietet darüber hinaus eine geschlossene Anlagefläche für ein in die Gewindebuchse einzuschraubendes Element, z. B. die vorstehend erwähnte Ölablaßschraube, so daß diese nur mit dem Material der Gewindebuchse in Berührung kommt, das üblicherweise härter ist als das Material des die Gewindebuchse aufnehmenden Werkstückes.

Vorzugsweise überragt der Deckbereich bei eingebauter Gewindebuchse die Werkstückoberfläche.

Weiterhin ist es zweckmäßig, wenn der Radius des Deckbereichs größer ist als der Maximalradius des Kragens.

Es ist von Vorteil, wenn der in Umfangsrichtung von der Kreisform abweichende Kragen eine Axialrändelung aufweist, da dann die Differenz zwischen dem Maximalradius und dem zugeordneten Minimalradius des Kragens relativ klein gehalten werden kann.

Als besonders zweckmäßig hat sich erwiesen, wenn der Überstand des Deckbereichs über die Rändelung größer oder etwa gleich der Rändeltiefe ist.

Auch hat sich als zweckmäßig herausgestellt, wenn die Dicke des Deckbereichs größer oder etwa gleich der Rändellänge ist.

Im folgenden wird eine bevorzugte Ausführungsform der Gewindebuchse genauer beschrieben. Es zeigt :

Figur 1 eine teilweise geschnittene perspektivische Ansicht der für den Einbau fertigen Gewindebuchse und

Figur 2 eine der Fig. 1 entsprechende Darstellung der eingebauten Gewindebuchse.

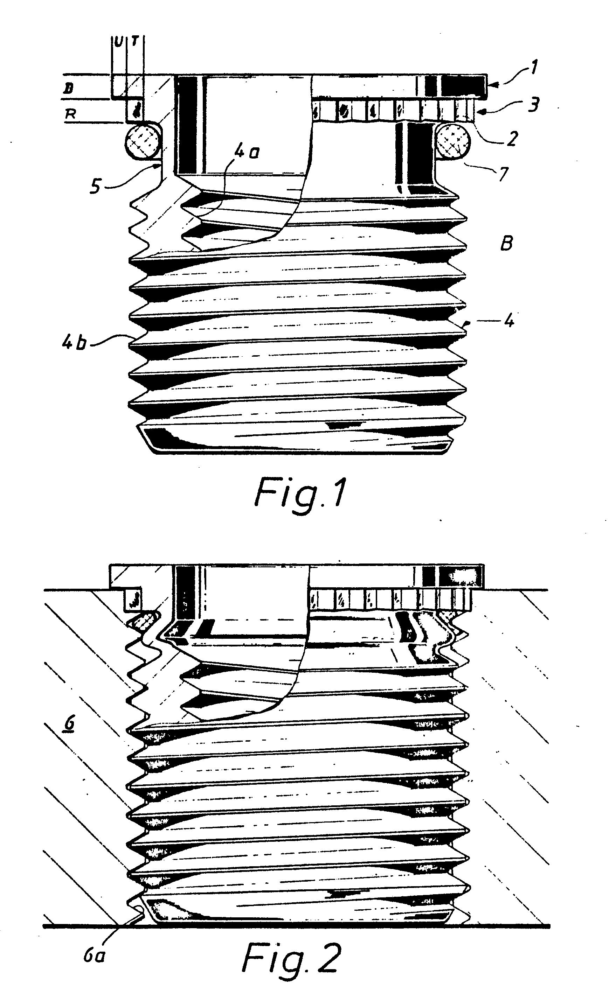

Die in den Fig. 1 und 2 gezeigte Gewindebuchse B besteht aus einem zylindrischen Deckbereich 1, einem an seinem Umfang mit einer Axialrändelung 2 versehenen Kragen 3, einem Gewindebereich 4 und einem zwischen beiden angeordneten, im wesentlichen glattwandigen, rohrartigen Stauchbereich 5, dessen Wandstärke geringer ist als der Kernquerschnitt des Gewindebereichs 4, der mit einem Innengewinde 4a und einem Außengewinde 4b versehen ist. Wie aus Vergleich der Fig. 1 und 2 ersichtlich ist, ist der Maximaldurchmesser des Kragens 3 so gewählt, daß er eine in einem Werkstück 6 vorgesehene Gewindebohrung 6a übergreift.

Bei der gezeigten Ausführungsform deckt der zylindrische Deckbereich 1 nicht nur die Axialrändelung 2 ab, sondern der Radius des Deckbereichs ist größer als der Maximalradius des Kragens.

Bei der gezeigten Ausführungsform ist der Überstand U etwa gleich der Rändeltiefe T und ist die Dicke D des Deckbereichs etwa gleich der Rängellänge R.

Ein Werkzeug für das Einbauen der Gewindebuchse B ist in der DE-A-28 11 747 beschrieben, auf die hiermit Bezug genommen wird.

Zunächst wird die Gewindebuchse B in die Gewindebohrung 6a eingeschraubt, bis die Unterseite der Axialrändelung 2 auf der Oberfläche des Werkstücks 6 aufsitzt. Danach wird ein Anschlag in Anlage an die Oberseite des Deckbereichs 1 gebracht, um den Kragen 3 in das Werkstück einzudrücken ; dabei werden auf das Innengewinde 4a Zugkräfte ausgeübt. Beim Eindrücken des Kragens 3 bis zur Anlage des zylindrischen Deckbereichs 1 an der Oberfläche des Werkstücks 6 erfolgt gleichzeitig ein Abbau des Spiels zwischen dem Außengewinde 4b und der Gewindebohrung 6a im Werkstück.

Beim Eindrücken des Kragens 3 wird der glattwandige Stauchbereich 5 gestaucht und erhält die in der Fig. 2 links oben ersichtliche Form, d. h., der gestauchte Bereich 5 greift in das Gewinde der Gewindebohrung 6a ein.

Das Material, aus dem die Gewindebuchse B gefertigt ist, ist härter als das Material des Werkstücks 6 ; es ist z. B. die Paarung Stahl/Gußaluminium möglich. Beim Eindrücken des Kragens 3 schließt sich das verdrängte Material des Werkstücks 6 eng an die Umfangsfläche des Kragens 3 an, so daß praktisch ein fugenloser Übergang zwischen der Umfangsfläche des Kragens und dem Material des Werkstücks 6 entsteht.

Wenn die Gewindebohrung 6a mit dem Ölvorrat eines Verbrennungsmotors in Verbindung steht und in die Gewindebuchse B eine Ölablaßschraube eingeschraubt ist, sitzt die Anlagefläche der Ölablaßschraube auf der freien Stirnfläche des Deckbereichs auf, wodurch eine gleichmäßige Beaufschlagung des Kragens und damit des Stauchbereichs 5 erreicht wird und ein Eingriff zwischen der Ölablaßschraube und dem weicheren Material des Motorgehäuses vermieden wird. Bei der gezeigten Ausführungsform überragt die Gewindebuchse die Werkstückoberfläche entsprechend ihrer Dicke D, so daß der Durchmesser des in die Buchse eingeschraubten Schraubelements auch größer sein kann als der Durchmesser des Deckbereichs, ohne daß eine Berührung zwischen Schraubelement und Werkstückoberfläche erfolgt.

Die Verwendung einer Axialrändelung anstelle eines Sechskants vergrößert die Eingriffsfläche zur Drehsicherung und führt zu einer gleichmäßigeren Verformung in Umfangsrichtung der oberen Gewindegänge der Gewindebohrung 6a.

Die Gewindebuchse ist vorzugsweise im Stauchbereich 5 von einem abdichtenden, wiederum vorzugsweise gummi-elastischen Ring 7 umgeben, wie er zusätzlich in den Fig. 1 und 2 dargestellt ist.

Der Deckbereich kann hinsichtlich seiner Dicke, seinem Durchmesser und der Gestaltung seiner Umfangsfläche und seiner freien Stirnfläche an die Erfüllung einer Zusatzfunktion angepaßt sein. Z. B. ist es möglich, daß in die freie Stirnfläche des Deckbereichs eine Nut eingebracht wird, die einen Dichtungs- oder Zentrierungsring aufnehmen kann. Die Dicke des Deckbereichs muß an die Tiefe der Nut angepaßt sein. Auch ist es möglich, z. B. in der Mitte der freien Stirnfläche einen vorstehenden Zentrierungsring auszubilden. Auch kann die Umfangsfläche des Deckbereichs als Zentrierfläche verwendet werden. Auch ist es möglich, daß die freie Stirnfläche eine nach innen oder außen abgestufte Ringfläche ist. Auch ist es wiederum möglich, die Dicke des Stirnbereichs so groß zu wählen, daß über den Deckbereich ein Schlauch geschoben und dort mit einer Klemmschelle befestigt werden kann. Weitere Anpassungen der Geometrie des Deckbereichs an eine Zusatzfunktion sind möglich.

Auch kann mit der Gewindebohrung 6a ein Schraubbolzen in der Weise zusammenwirken, wie es in den Fig. 7-8 der DE-A-28 11 747 gezeigt ist.

## Ansprüche

1. Gewindebuchse mit Außengewinde, Innenbohrung und Verdrehsicherung, mit einem angeformten, umlaufenden und in Umfangsrichtung von der Kreisform abweichenden Kragen (3) und einem sich anschließenden, im wesentlichen glattwandigen Bereich (5) mit geringerer Wandstärke als ein sich an diesen Bereich anschließenden und das Außengewinde (4b) tragenden Gewindebereich (4), wobei nach Einschrauben der Gewindebuchse in eine Aufnahmebohrung eines Werkstücks bis zur Anlage der die Aufnahmebohrung übergreifenden Teile des Kragens (3) an der Oberfläche des Werkstücks der Kragen unter Verminderung der Höhe des glattwandigen Bereichs durch Stauchen in die Oberfläche des Werkstücks durch axiale Belastung des Kragens einpreßbar ist, dadurch gekennzeichnet, daß sich an den in Umfangsrichtung von der Kreisform abweichenden Kragen (3) nach außen ein zylinderartiger Deckbereich (1) anschließt, dessen Radius wenigstens gleich dem maximalen radialen Abstand der Umfangsfläche des Kragens von der Achse der Innenbohrung ist.

2. Gewindebuchse nach Anspruch 1, dadurch gekennzeichnet, daß der Deckbereich (1) bei eingebauter Gewindebuchse die Werkstückoberfläche überragt.

3. Gewindebuchse nach Anspruch 1 oder 2, dadurch gekennzeichnet, daß der Radius des Deckbereichs (1) größer ist als der Maximalradius des Kragens.

4. Gewindebuchse nach einem der Ansprüche 1 bis 3, dadurch gekennzeichnet, daß der Kragen (3) eine Axialrändelung (2) aufweist.

5. Gewindebuchse nach einem der Ansprüche 1 bis 4, dadurch gekennzeichnet, daß der Überstand (U) des Deckbereichs (1) über die Rändelung (2) größer oder etwa gleich der Rändeltiefe (T) ist.

6. Gewindebuchse nach einem der Ansprüche 1 bis 5, dadurch gekennzeichnet, daß die Dicke (D) des Deckbereichs (1) größer oder etwa gleich der Rändellänge (R) ist.

7. Gewindebuchse nach einem der Ansprüche 1 bis 6, dadurch gekennzeichnet, daß der glattwandige Bereich (5) der Gewindebuchse (B) von einem Dichtungsring (7) umgeben ist.

## Claims

1. An insert comprising an external thread, an internal bore, and an anti-rotation lock device, an integrally-formed, continuous collar 3 deviating in circumferential direction from circular shape, and an adjacent, substantially smooth-walled portion 5 of lesser wall thickness than a threaded portion 4 adjacent said portion and provided with the external thread 4b, the collar being pressable into the surface of the workpiece by an axial load acting on the collar while reducing the height of the smooth-walled portion by upsetting upon screwing the insert into a bore of a workpiece until the parts of the collar 3 overlapping the bore contact the surface of the workpiece, characterized in that a cylindrical top portion 1 extends outwardly adjacent of the collar 3 deviating in circumferential direction from circular shape, the radius of said top portion being at least equal to the radial maximum spacing of the circumferential surface of the collar from the axis of the internal bore.

2. The insert as in claim 1, characterized in that the top portion 1 extends beyond the workpiece surface when the insert is inserted.

3. The insert as in claim 1 or 2, characterized in that the radius of the top portion 1 is larger than the maximum radius of the collar.

4. The insert as in any of the claims 1-3, characterized in that the collar 3 has an axial knurl 2.

5. The insert as in any of the claims 1-4, characterized in that the overlap U of the top portion 1 beyond the knurl 2 is larger than or approximately equal to the knurl depth T.

6. The insert as in any of the claims 1-5, characterized in that the thickness D of the top portion 1 is larger than or approximately equal to the knurl length R.

7. The insert as in any of the claims 1-6, characterized in that the smooth-walled portion 5 of the insert B is surrounded by a seal ring 7.

## Revendications

1. Douille filetée, à filetage externe, perçage interne et dispositif de blocage anti-rotatif, comportant un collet (3), venu de moulage, qui l'entoure, et qui, dans la direction périphérique, s'écarte de la forme circulaire ainsi qu'une zone (5), qui s'y raccorde, et dont la paroi, sensiblement lisse, présente une épaisseur inférieure à celle d'une zone filetée (4), qui porte le filetage externe (4b) et se raccorde à ladite zone (5), de telle sorte que, après vissage de la douille filetée dans un perçage d'une pièce jusqu'à application des parties dudit collet (3), qui débordent au-dessus dudit perçage, contre la surface de la pièce, le collet peut être encastré dans la surface de la pièce grâce à un effort axial exercé sur ledit collet, avec réduction de la hauteur de la zone à paroi lisse, par refoulement, douille filetée caractérisée par le fait qu'une partie de recouvrement (1), de forme cylindrique, se raccorde vers l'extérieur au collet (3), qui s'écarte, dans la direction périphérique, de la forme circulaire, cette partie de recouvrement (1) présentant un rayon au moins égal à la distance radiale maximale entre la surface périphérique dudit collet et l'axe du perçage interne.

2. Douille filetée selon la revendication 1, caractérisée par le fait que la partie de recouvrement (1) fait saillie au-dessus de la surface de la pièce lorsque la douille est en position montée.

3. Douille filetée selon la revendication 1 ou la revendication 2, caractérisée par le fait que le rayon de la partie de recouvrement (1) est supérieur au rayon maximal du collet.

4. Douille filetée selon l'une des revendications 1 à 3, caractérisée par le fait que le collet (3) est moleté dans la direction axiale.

5. Douille filetée selon l'une des revendications 1 à 4, caractérisée par le fait que la partie de recouvrement (1) déborde au-delà du moletage (2) d'une distance (U) supérieure ou sensiblement égale à la profondeur (T) du moletage.

6. Douille filetée selon l'une des revendications 1 à 5, caractérisée par le fait que l'épaisseur (D) de la partie de recouvrement (1), est supérieure ou sensiblement égale à la hauteur du moletage (R).

7. Douille filetée selon l'une des revendications 1 à 6, caractérisée par le fait que la zone à paroi lisse (5) de la douille filetée (B) est entourée par une bague d'étanchéité (7).

Fig.1

Fig.2

1